(19) Europäisches Patentamt / European Patent Office / Office européen des brevets

(11) **EP 3 761 015 B1**

(12) **EUROPÄISCHE PATENTSCHRIFT**

(45) Veröffentlichungstag und Bekanntmachung des Hinweises auf die Patenterteilung:
**05.07.2023 Patentblatt 2023/27**

(21) Anmeldenummer: **20172118.0**

(22) Anmeldetag: **29.04.2020**

(51) Internationale Patentklassifikation (IPC):
***G01N 23/04*** *(2018.01)* ***G01B 15/02*** *(2006.01)*
***G01N 23/083*** *(2018.01)*

(52) Gemeinsame Patentklassifikation (CPC):
**G01N 23/04; G01B 21/042; G01N 23/083;**
G01B 11/06; G01B 15/025

(54) **PRÜFKÖRPER**

TEST BODY

CORPS D'ESSAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2019 DE 102019111560**

(43) Veröffentlichungstag der Anmeldung:
**06.01.2021 Patentblatt 2021/01**

(73) Patentinhaber: **WIPOTEC GmbH**
**67657 Kaiserslautern (DE)**

(72) Erfinder:
• **Heil, Ulrich**
  **66907 Glan-Münchweiler (DE)**
• **Bur, Christian**
  **66113 Saarbrücken (DE)**

(74) Vertreter: **Eder Schieschke & Partner mbB**
**Patentanwälte**
**Elisabethstraße 34**
**80796 München (DE)**

(56) Entgegenhaltungen:
**US-A1- 2011 206 182 US-B1- 6 570 955**

• **A. BRAMBILLA ET AL: "Basis material decomposition method for material discrimination with a new spectrometric X-ray imaging detector", JOURNAL OF INSTRUMENTATION, Bd. 12, Nr. 08, 18. August 2017 (2017-08-18), Seiten P08014-P08014, XP055752984, DOI: 10.1088/1748-0221/12/08/P08014**

EP 3 761 015 B1

**Beschreibung**

Die vorliegende Erfindung betrifft einen Prüfkörper zur Durchstrahlung mittels elektromagnetischer Strahlen, vorzugsweise Röntgenstrahlen. Der Prüfkörper dient zur Bestimmung von Referenzwerten, welche die Durchstrahlungseigenschaften eines Materials und insbesondere einer Paarung unterschiedlicher Materialien beschreiben.

Bei der industriellen Fertigung von Produkten, insbesondere Lebensmitteln, ist häufig eine Untersuchung der Produkte auf unerwünschte Fremdkörper oder Verunreinigungen erforderlich, oder der Anteil bzw. die Dicke eines bestimmten Materials B an einer bestimmten Position innerhalb, oberhalb oder unterhalb des Materials A des Produktes ist zu ermitteln. Beispielsweise soll festgestellt werden, ob oder in welchem Anteil ein Stück Fleisch (als Material A) an einer bestimmten Position Knochen oder Fett (als Material B) aufweist. Das Produkt lässt sich dazu mittels Röntgenstrahlen durchstrahlen, wobei grundsätzlich auch jede andere zur Durchstrahlung geeignete Energieform Verwendung finden kann, etwa Terahertzstrahlung. Die verbleibende Intensität der aus dem durchstrahlten Produkt austretenden Röntgenstrahlen wird über einen Detektor (Zeilen- oder Flächensensor) erfasst und in einen der Intensität entsprechenden sogenannten "Grauwert" gewandelt. Dieser ist dann charakteristisch für eine bestimmte Dicke eines allein durchstrahlten Materials oder für eine Kombination des Materials A in einer bestimmten Dicke mit dem Material B in einer bestimmten Dicke (welche sich von der Dicke des Materials A auch unterscheiden kann)

Um aus dem im laufenden Betrieb gemessenen Grauwert die korrekte Dicke des Materials oder der miteinander kombinierten Materialien zuordnen zu können muss zuvor für jede infrage kommende Materialdicke bzw. für jede Paarung zweier unterschiedlicher Materialien in jeweils verschiedenen Dicken der zugehörige Grauwert ermittelt bzw. simuliert und zur Zuordnung in einer geeigneten Datenverarbeitungsvorrichtung, beispielsweise in Tabellenform, hinterlegt werden (Anlernphase) Da hierbei Zuordnungen festgelegt werden, kann auch von Justieren gesprochen werden und der Prüfkörper könnte auch die Bezeichnung "Justierkörper" tragen. Für einen im regulären Betrieb gemessenen Grauwert lässt sich dann die Dicke des reinen Materials oder der in Strahlungsrichtung hintereinander liegenden Materialien anhand der Tabelle ermitteln. Zur Simulation der Durchstrahlungseigenschaften werden nach bisheriger Praxis die beiden infrage kommenden Materialien nacheinander in unterschiedlichen Dicken übereinandergelegt und jeweils durchstrahlt, um den zugehörigen Grauwert zu ermitteln und hinterlegen zu können (bevorzugt werden hier nicht die Materialien selbst sondern Ersatzmaterialien verwendet, welche die gleichen oder ähnliche Durchstrahlungseigenschaften besitzen, dauerhaft haltbar und gut bearbeitbar sind). Die Erstellung einer alle relevanten Dickenkombinationen enthaltenden Grauwerttabelle auf diese Weise ist sehr zeitaufwendig, und auch die Bereitstellung jedes Ersatzmaterials in unterschiedlichen Dicken ist aufwendig.

Aus der US 6 570 955 B1 ist ein Prüfkörper zur Durchstrahlung mittels Röntgenstrahlen bekannt, bei dem in einer Vielzahl von Segmenten jeweils wenigstens zwei unterschiedliche Materialien in einer Durchstrahlungsrichtung miteinander kombiniert sind, um aus der jeweiligen Durchstrahlung Referenzwerte für in der Praxis auftretende vergleichbare Materialpaarungen zu ermitteln. Die sich ergebenden Gesamtdicken der einzelnen Segmente sind jedoch für eine zügige Auswertung unhandlich, was zu einer unförmigen Gestaltung des gesamten Prüfkörpers führt.

Aufgabe der Erfindung war es daher, eine Vorrichtung und ein Verfahren anzubieten, um für eine Vielzahl möglicher Kombinationen von zwei oder auch mehr verschiedenen Materialien in jeweils wählbarer Dicke unter geringem zeitlichen und konstruktiven Aufwand jeweils einen Referenzwert (Grauwert) erfassen zu können.

Die Aufgabe wird gelöst durch einen Prüfkörper nach Anspruch 1, eine Röntgeninspektionsvorrichtung nach Anspruch 14 und ein Verfahren nach Anspruch 16.

Die Erfindung beruht auf der Erkenntnis, die Kombination wenigstens zweier Materialien in jeweils variierende Dicke ermöglichen zu können mittels eines speziellen Profilblocks, der aus einem der Materialien gebildet ist. Der Profilblock ist im wesentlichen zweidimensional in einer ersten horizontalen Längsrichtung X- und einer dazu rechtwinkligen, ebenfalls horizontalen Querrichtung Y ausgebildet ist. Die zu beiden Richtungen X, Y senkrechte dritte Richtung Z ist dabei zugleich die Richtung der Dicke Der Profilblock ist aus einem ersten Material $M_A$ gefertigt, welches die gleichen oder sehr ähnliche Durchstrahlungseigenschaften aufweist wie ein im Produktionsbetrieb zu untersuchendes Produktmaterial. Der Profilblock kann dazu monolithisch ausgebildet sein. Der Profilblock wird kombiniert mit einem Gegenblock aus einem zweiten Material $M_B$, welches die gleichen oder sehr ähnliche Durchstrahlungseigenschaften aufweist wie das im laufenden Betrieb zu untersuchende zweite Material. Erfindungsgemäß erfolgt die Kombination, indem der Profilblock und der Gegenblock in Z-Richtung bzw. in Durchstrahlungsrichtung über- oder untereinander angeordnet und gemeinsam durchstrahlt werden. Zweckmäßigerweise sind die Durchstrahlungseigenschaften des Material $M_A$ des Profilblocks bezüglich Röntgenstrahlen verschieden von denjenigen des Materials $M_B$ des Gegenblocks B.

Profilblock und Gegenblock bilden gemeinsam einen erfindungsgemäßen Prüfkörper. Die Erfindung sieht vor, dass der Profilblock in einer X-Y-Matrix Segmente $S_{xy}$ mit jeweils konstanter Dicke $D_{xy}$ in Z-Richtung aufweist. Jedes Segment ist durch seine jeweilige X- und Y-Koordinate (x, y) identifizierbar und in einem in einer X-Y-Ebene liegenden Segmentbereich in Z-Richtung durchstrahlbar. In X-Richtung ist eine Anzahl von n Segmenten und in Y-Richtung eine Anzahl von k Segmenten vorgesehen, wobei n und k jeweils größer sind als eins. Jedes Segment erstreckt sich in Z-Richtung von einer Oberseite $O_{xy}$, die auf einer Oberseitenhöhe $HO_{xy}$ liegt, bis zu einer Unterseite $U_{xy}$, die auf einer Unterseitenhöhe $HU_{xy}$ liegt, und bildet dadurch die Dicke $D_{xy}$ aus. Der Profilblock (genauer: seine zur Durchstrahlung vorgesehenen Segmentbereiche) erstrecken sich in Z-Richtung zwischen einem Basisniveau $H_{min}$, welches den Mindestwert für jede Unterseitenhöhe $HU_{xy}$ bildet, und einem Maximalniveau $H_{max}$, welches den Maximalwert für jede Oberseitenhöhe $HO_{xy}$ bildet.

Die der Erfindung zugrunde liegende Idee beruht darauf, den Profilblock in der Längsrrichtung (X-Richtung) mit segmentweise zunehmender Dicke auszubilden, wobei die Dicke vorzugsweise jeweils um einen konstanten Wert zunimmt. In der zur X-Richtung orthogonal Querrichtung (Y-Richtung) bleibt die durch die jeweilige X-Koordinate vorgegebene Dicke hingegen unabhängig von der Y-Koordinate konstant. Erfindungsgemäß ändert sich jedoch in Abhängigkeit der Y-Koordinate die Höhenlage des jeweiligen Segments. Vorzugsweise ändert sich die Höhenlage mit zunehmender Y-Koordinate jeweils um einen konstanten Wert. Der Profilblock erhält dadurch auf seiner Oberseite die Gestalt einer Treppe, welche in zunehmender X-und Y-Richtung jeweils ansteigt. Die Unterseite hingegen ist komplementär zu einer Treppe ausgebildet, deren Stufen in X-Richtung eine konstante Höhe aufweisen, während die Höhe der Unterseite in Y-Richtung mit jeder Stufe zunimmt.

Der Profilblock aus dem Material Ma, ist somit in Z-Richtung - beispielsweise durch Aufeinanderlegen - kombinierbar mit einem Gegenblock aus dem Material $M_B$, dessen Oberseite $O_B$ in Gestalt einer komplementär zur Unterseite des Profilblocks ausgebildeten Treppe geformt ist, wobei die Positiondes Profilblocks relativ zum Gegenblock als Prüfanordnung bezeichnet sein soll. Ist der Gegenblock dabei so gestaltet, dass die Dicke jeder Stufe mit zunehmender Y-Koordinate zunimmt, so ergibt sich für die einzelnen Segmente in der X-Y-Matrix des Profilblocks mit darunterliegendem Gegenblock jeweils eine Kombination des Materials Ma, in einer in X-Richtung zunehmenden und in Y-Richtung konstanten Dicke mit dem Material $M_B$ in einer in X-Richtung konstanten und in Y-Richtung zunehmenden Dicke. Eine Vielzahl von Materialkombinationen unterschiedlicher Dicke lässt sich so auf relativ geringem Raum herstellen, ohne dass die Prüfanordnung geändert werden muss. Der Begriff "Segment" umfasst bei einer Kombination von Profilblock mit Gegenblock das Material bzw. die Materialkombination, die sich an der durch die Segmentkoordinaten bestimmten Position in Z-Richtung insgesamt ergibt.

Die Prüfanordnung, d.h. die Position des Profilblocks relativ zum Gegenblock, ist je nach Anforderung vorgebbar. Die beiden Blöcke können sich unmittelbar aneinander anschmiegen, in Z-Richtung beabstandet zueinander positioniert werden oder quer dazu um eine oder mehrere Segmentbreiten versetzt angeordnet sein.

Hinweis: Die Durchstrahlungseigenschaften eines Materials ändern sich üblicherweise in Abhängigkeit der Materialdicke. Die Kombination unterschiedlicher Materialdicken dient erfindungsgemäß dazu, die dickenabhängigen Durchstrahlungseigenschaften zweier Materialien zu kombinieren. Vor diesem Hintergrund ist die in dieser Anmeldung beschriebene Kombination unterschiedlicher Dicken oder unterschiedlicher Materialien zu verstehen als Kombination unterschiedlicher Durchstrahlungseigenschaften (genauer : Absorptionseigenschaften) verschiedener Materialien.

Der aus dem Profilblock und dem Gegenblock gebildete Prüfkörper kann dann in der Anlernphase, beispielsweise in X-Richtung, durch einen sich quer dazu erstreckenden Röntgenstrahlfächer hindurch gefahren werden, wobei die durch jedes Segment in Z-Richtung hindurchtretenden Röntgenstrahlen von einem darunter liegenden Detektor segmentbezogen erfasst und zumindest hinsichtlich ihrer verbleibenden Intensität ausgewertet werden. Anders als im Stand der Technik müssen die Materialien zur Überlagerung verschiedener Dicken des ersten Materials mit verschiedenen Dicken des zweiten Materials nicht mehr relativ zueinander bewegt werden, um jede gewünschte Dickenkombinationen zeitlich nacheinander zu erfassen, da alle relevanten Kombinationen durch den als Matrix gestalteten Prüfkörper bereits fertig ausgebildet sind. Die Durchstrahlung der einzelnen Segmente und die Erfassung, Auswertung und Hinterlegung der jeweiligen Grauwerte in einer Steuer- bzw. Datenverarbeitungseinheit kann daher zügig und in einer einzigen Relativposition von Profilblock und Gegenblock zueinander erfolgen.

Der vorteilhafte Unterschied zum Stand der Technik ist offensichtlich. Bisher wurden einzelne Materialpaarungen (in Z-Richtung übereinanderliegend) jeweils in nur in einer Richtung, beispielsweise der Längsrichtung X, hintereinander liegend angeordnet. Um alle gewünschten Dickenpaarungen so hintereinanderliegend auszubilden ist ein sehr langer und unhandlicher Prüfkörper erforderlich, der daher nicht parallel zum Röntgenstrahlfächer (quer zur Fördereinrichtung) durch diesen hindurch bewegt werden kann (oder die einzelnen Paarungen sind aufgrund der begrenzten Detektorbreite quer zur Fördereinrichtung zu kurz, um einen zuverlässigen Absorptionswert ermitteln zu können). Erstreckt sich die Längsrichtung X des Prüfkörpers daher bei der Durchstrahlung in Förderrichtung und nicht quer dazu, dauert die Durchstrahlung sämtlicher einzelnen Dickenpaarungen unverhältnismäßig lange. Der erfindungsgemäße Prüfkörper dagegen bietet auf geringer horizontaler Fläche zweidimensional eine Vielzahl unterschiedlicher Dickenkombinationen und aufgrund der kompakten Ausbildung kann die X- bzw. Y-Achse des Prüfkörpers in der Anlernphase rechtwinklig oder parallel oder auch unter einem frei wählbaren Winkel zum Röntgenstrahlfächer ausgerichtet sein, und die schnelle Erfassung aller Dickenkombinationen ist dennoch einfach möglich.

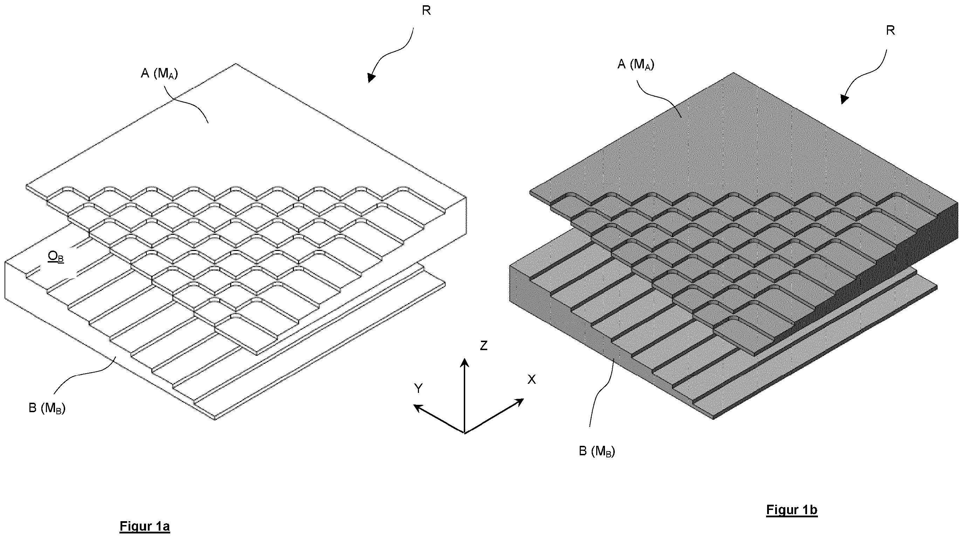

Jedes Segment des Profilblocks hat eine Oberseitenhöhe $HO_{xy}$. Die Oberseitenhöhe nimmt in X-Richtung und in Y-Richtung jeweils segmentweise zu, sodass die Segmente insgesamt eine Anzahl f unterschiedlicher Oberseitenhöhen bilden. Ein Profilblock mit einer 10 x 10 - Segmentmatrix würde beispielsweise 100 Segmente mit 19 verschiedenen Oberseitenhöhen ausbilden. Eine Begrenzung der maximalen Höhe des Profilblocks, beispielsweise auf das Niveau der Oberseite des Segments mit den Koordinaten x=10, y=1, kann jedoch zweckmäßig sein und würde dazu führen, dass alle Segmente, deren Koordinatensumme (x+y) größer ist als 10, die gleiche Oberseitenhöhe $HO_{xy} = H_{max}$ aufweisen (siehe Fig. 1). Für Segmente mit (x+y) > 10 nimmt in diesem Fall die Dicke des Profilblocks mit zunehmender Y-Koordinate wieder ab und bleibt bei zunehmender X-Koordinate konstant. Die Begrenzung kann auf jedem gewünschten Niveau liegen.

Erfindungsgemäß ist der Profilblock so ausgebildet, dass für wenigstens vier, vorzugsweise alle Segmente die Oberseitenhöhe $HO_{xy}$ mit zunehmendem x-Index und mit zunehmendem y-Index zunimmt bis höchstens auf das Maximalniveau ($H_{max}$), während die Unterseitenhöhe ($HU_{xy}$) mit zunehmendem x-Index konstant bleibt und mit zunehmendem y-Index zunimmt.

Ein solcher Profilblock aus einem ersten Material Ma, ist mithilfe eines geeigneten Gegenblocks aus einem zweiten Material zu einem erfindungsgemäßen Prüfkörper gemäß Anspruch 1 kombinierbar. Profilblock und Gegenblock erstrecken sich dabei in einer Längsrrichtung (X), einer dazu rechtwinklig verlaufenden Querrichtung (Y) und einer zu den beiden Richtungen (X, Y) senkrecht verlaufenden Höhenrichtung (Z).

Der Profilblock weist eine Anzahl von Bereichen mit in Z-Richtung unterschiedlicher Dicke $D_{A1}$, $D_{A2}$, ... auf ebenso wie der Gegenblock, der eine Anzahl von Bereichen mit in Z-Richtung unterschiedlicher Dicke ($D_{B1}$, $D_{B2}$, ...) aufweist. Profilblock und Gegenblock sind in einer vorgebbaren Prüfanordnung in Z-Richtung übereinander anordenbar, um gemeinsam in Z-Richtung durchstrahlbare, voneinander verschiedene Materialpaarungen zu bilden. Erfindungsgemäß sind dabei in der Prüfanordnung wenigstens zwei, vorzugsweise alle verschiedenen, Dicken $D_{A1}$, $D_{A2}$,... des Profilblocks jeweils mit wenigstens zwei, vorzugsweise allen verschiedenen Dicken $D_{B1}$, $D_{B2}$... kombiniert. Zu jeder einzelnen im Profilblock vorhandenen Dicke gibt es daher jeweils eine Kombination mit jeder einzelnen im Gegenblock gebildeten Dicke, sodass Materialpaarungen entstehen in folgender Systematik:

$D_{A1}$-$D_{B1}$; $D_{A1}$-$D_{B2}$; $D_{A1}$-$D_{B3}$... $D_{A2}$-$D_{B1}$; $D_{A2}$-$D_{B2}$; $D_{A2}$-$D_{B3}$... usw.

Die Erfindung sieht vor, dass die Dicken des Profilblocks und des Gegenblocks so gewählt sind, dass der Prüfkörper mehrere Segmente aufweist, bei denen die Kombination verschiedener Einzeldicken des Profilblocks mit verschiedenen Einzeldicken des Gegenblocks jeweils zu einer gleichen Gesamtdicke des Prüfkörpers führt. Diese Gesamtdicke entspräche beispielsweise der Dicke eines zu durchstrahlenden Fleischstückes (Fleisch: Material $M_A$), wobei das Fleischstück daraufhin zu untersuchen ist, ob bzw. zu welchem Teil diese Gesamtdicke durch ein Stück Knochen (Knochen: Material $M_B$) gebildet wird. Trotz gleicher Gesamtdicke ergeben sich unterschiedliche Grauwerte bzw. Absorptionseigenschaften je nachdem, welches Material in welcher Dicke innerhalb des untersuchten Bereichs des Fleischstückes vorliegt. In Kenntnis der Gesamtdicke des Fleischstückes können dann zunächst die in zuvor angelernten und in der Tabelle hinterlegten Grauwerte ausgewählt werden, die für diese Gesamtdicke simuliert wurden. Aus diesen Grauwerten ist dann derjenige auszuwählen, der dem gemessenen Grauwert am ehesten entspricht. Die diesem simulierten Grauwert zugehörige Materialpaarung lässt sich dann aus der hinterlegten Tabelle bestimmen.

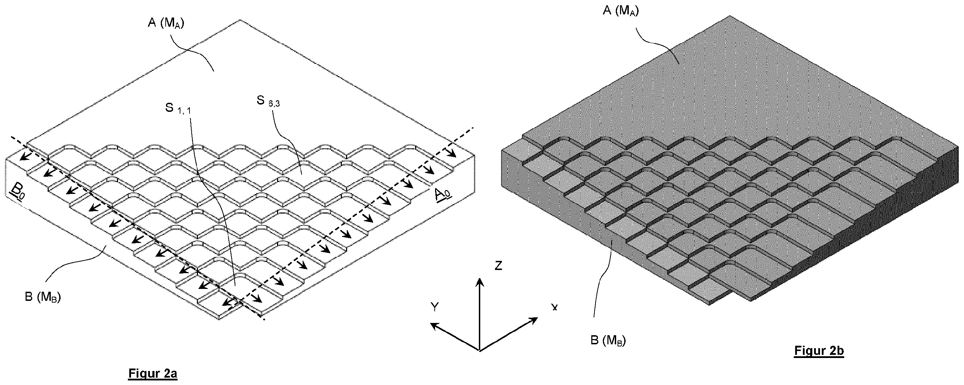

Erfindungsgemäß sind zwei Segmente gleicher Gesamtdicke im Prüfkörper diagonal zueinander benachbart mit der Maßgabe, dass die Summe ihrer Koordinaten konstant ist (x + y = const.). Bereiche gleicher Gesamtdicke erstrecken sich dann bei einem Prüfkörper mit etwa quadratischen oder rechteckigen Segmenten in diagonaler Richtung (Siehe bspw. Fig. 2a).

Nach einer vorteilhaften Ausführungsform der Erfindung ändert sich die Dicke des Profilblocks mit zunehmendem x-Index um einen konstanten Wert. Die zu durchstrahlende Dicke des Profilblocks ändert sich mit zunehmender X-Koordinate dann linear. Dies ist zweckmäßig, wenn sich die Durchstrahlungseigenschaft des Materials beziehungsweise die Strahlungsintensität eines durch den Profilblock gerichteten und danach vom Detektor erfassten Röntgenstrahls linear zur Dicke verhält. Denkbar ist jedoch auch eine Variante, bei der die Änderung der Dicke zum in X-Richtung jeweils benachbarten Segment einer anderen, nichtlinearen mathematischen Bedingung gehorcht. So könnte beispielsweise ein bestimmter Kunststoff oder ein Metall Röntgenstrahlen über -oder unterproportional zur jeweils durchstrahlten Dicke absorbieren. Durch Anpassung der einzelnen Dicken an diesen nichtlinearen Zusammenhang der Absorption könnte sichergestellt werden, dass die Strahlungsabsorption bzw. die Strahlungsintensität des erfassten Röntgenstrahls mit zunehmender X- oder Y-Koordinate dann trotzdem stufenweise linear ab- oder zunimmt.

Der erfindungsgemäße Profilblock erhält seine charakteristische Form durch die Vorgabe, dass sich die Dicke in X-Richtung segmentweise ändert, in Y-Richtung jedoch konstant bleibt (abgesehen von Begrenzungen die durch eine maximale Bauhöhe vorgegeben sind). Durch diese Vorgabe lässt sich der Profilblock mit einem treppenartigen Gegenblock so in Z-Richtung übereinander anordnen, dass in einer X-Y-Matrix die unterschiedlichen Dicken des Profilblocks jeweils mit den unterschiedlichen Dicken des Gegenblocks kombiniert werden. Auf vergleichsweise engem Raum lässt sich damit eine Vielzahl unterschiedlicher Dickenkombinationen erreichen, ohne dass Profilblock und Gegenblock dabei relativ zueinander bewegt werden müssen. Erfindungsgemäß kann der Prüfkörper segmentweise auf engem Raum die Parameter

    Dicke der Profilblocks
    Dicke des Gegenblocks, und
    Gesamtdicke des Prüfkörpers

jeweils variieren und kombinieren. Spezielle lineare oder nicht-lineare Absorptionseigenschaften können durch Anpassung der jeweiligen Dicken mit berücksichtigt werden. Höchst vorzugsweise ist die Dicke eines in ansteigender X-Richtung zu einem Ausgangssegment benachbarten Segments so gewählt, dass die Oberseitenhöhe dieses benachbarten Segments derjenigen Oberseitenhöhe des Segments entspricht, welches in aufsteigender Y-Richtung an das Ausgangssegment angrenzt. Dann ist die Stufenhöhe, ausgehend von einem Ausgangssegment, auf das nächsthöhere Segment in X-Richtung genauso hoch wie auf das nächsthöhere Segment in Y-Richtung.

Der erfindungsgemäße Profilblock umfasst oberhalb des Basisniveaus eine mit "f" bezeichnete Anzahl unterschiedlicher Oberseitenhöhen. Die Oberseite jedes Segments bildet dabei jeweils eine Oberseitenhöhe, wobei mehrere Segmente die gleiche Oberseitenhöhe aufweisen können. Wie unter anderem Figur 1a offenbart, liegt dies daran, dass die Oberseitenhöhe eines Segments bestimmt wird einerseits durch die Dicke des Profilblocks an diesem Segment und andererseits durch die Unterseitenhöhe, also das Höhenniveau, von dem sich das jeweilige Segment in Z-Richtung aufwärts erstreckt. Da erfindungsgemäß beides variiert, ergeben sich mehrere Segmente mit gleicher Oberseitenhöhe dann, wenn die Unterseitenhöhe in Y-Richtung im gleichen Maße ansteigt wie die Dicke in X-Richtung.

Die Oberseite des erfindungsgemäßen Profilblocks zeichnet sich dadurch aus, dass - ausgehend von einem Ausgangssegment - die Oberseitenhöhe sowohl des Nachbarsegments mit dem nächsthöheren X-Index als auch desjenigen mit dem nächsthöheren Y-Index zunimmt, solange eine vorgegebene Maximalhöhe $H_{max}$ diesen Zuwachs nicht begrenzt. Der Höhenunterschied in Z-Richtung von einem Ausgangssegment auf ein in X-Richtung oder in Y-Richtung angrenzendes, höher liegendes Nachbarsegment kann auch als Profilblockstufe bezeichnet werden. Bei einem Profilblock mit n in X-Richtung aneinandergrenzenden Segmenten und k in Y-Richtung aneinandergrenzenden Segmenten ergibt sich die Gesamtzahl f unterschiedlicher Oberseitenhöhen bzw. Profilblockstufen nach der Formel

$$f = (n + k - 1)$$

Der in Figur 1a gezeigte Profilblock mit n=10 und k=10 hätte bei in der Höhe unbegrenzter Ausbildung 100 Segmente mit f=19 verschiedenen Oberseitenhöhen. Aus konstruktiven Gründen kann der Profilblock jedoch auch auf eine Höhe bzw. eine Anzahl Profilblockstufen begrenzt werden, oberhalb derer in der Matrix keine zusätzlichen Oberseitenhöhen mehr ausgebildet sind. Der Profilblock gemäß Figur 1a beispielsweise ist begrenzt auf eine maximale Höhe $H_{max}$, die von den Oberseitenhöhen derjenigen Segmente bestimmt wird, für deren Koordinaten gilt (x + y) = 11.

Die Dicke ($D_{xy}$) eines Segments im Profilblock (A) folgt vorzugsweise aus der Bedingung $D_{xy} = HO_{xy} - HU_{xy}$, wobei für eine Gruppe von wenigstens vier Segmente gilt:

$$HO_{xy} = H_{min} + (H_{max} - H_{min}) \cdot (x+y-1)/f$$

und

$$HU_{xy} = H_{min} + (H_{max} - H_{min}) \cdot (y-1)/f$$

Vorzugsweise gilt der vorgenannte Zusammenhang mindestens für alle Segmente mit der Koordinate x=1 oder y=1. Eine maximale Höhe $H_{max}$ ist erst dann erreicht, wenn der Profilblock für y=1 in X-Richtung bzw. für x=1 in Y-Richtung n bzw. k verschiedene Oberseitenhöhen ausgebildet hat.

So folgt für den in Figur 1a gezeigten Profilblock mit begrenzter Zahl an Profilblockstufen (f = 10) die Oberseitenhöhe $HO_{2,7}$ für das Segment $S_{2,7}$ unter der beispielhaften Annahme $H_{max} = 10$, $H_{min} = 0$:

$$HO_{2,7} = 0 + (10 - 0) \cdot (2+7-1)/10 = 8$$

Der vollständig ausgebildete Profilblock (nach dem Vorbild der Figur 1a, jedoch mit voller Profilblockstufenzahl f=19) hätte entsprechend die maximale Höhe $H_{max}$=19, sodass sich für das Segment $S_{2,7}$ die Oberseitenhöhe wieder ergäbe zu:

$$HO_{2,7} = 0 + (19 - 0) \cdot (2+7-1)/19 = 8$$

und die Oberseitenhöhe des beispielhaft gewählten Segments $S_{7,8}$ ergäbe sich zu :

$$HO_{7,8} = 0 + (19 - 0) \cdot (7+8-1)/19 = 14$$

Nach einer vorteilhaften Ausführungsform weist jedes Segment einen Bereich mit einer gewissen Mindestausdehnung in X-und Y-Richtung auf, um für die vom Detektor erfassten Intensitäten der durch dieses Segment hindurch gerichteten Röntgenstrahlen einen repräsentativen Mittelwert bilden zu können. Vorzugsweise betragen die horizontalen Abmessungen jedes Segments oder zumindest des für die Durchstrahlung im Segment vorgesehenen Bereiches zwischen 40mm x 40mm, höchst vorzugsweise 20mm x 20mm, noch bevorzugter mehr als 5mm x 5mm.

Die in den Figurenbeispielen gezeigten Ausführungsformen des Profilblocks zeigen Segmente, die in horizontaler Richtung im Wesentlichen quadratische Gestalt haben. Denkbar ist jedoch eine beliebige Ausführungsform, bei der die Segmente zum Beispiel rund oder rechteckig ausgebildet sind, also in eine der beiden horizontalen Richtungen eine größere Ausdehnung haben als in der jeweils anderen horizontaler Richtung. Dies kann zweckmäßig sein, um einen besseren Mittelwert bilden zu können bezogen auf die längere der beiden Abmessungen. Vorzugsweise weisen einige oder alle Segmente ($S_{xy}$) eine im Wesentlichen ebene Unterseite ($U_{xy}$) und/oder Oberseite $O_{xy}$ senkrecht zur Z-Richtung auf.

Der Gegenblock, der zur Ausbildung des Prüfkörpers mit dem Profilblock kombiniert wird, ist aus einem Material $M_B$ gefertigt, welches sich in wenigstens einer Eigenschaft vom Material $M_A$ des Profilblocks unterscheidet. Der Eigenschaftsunterschied sollte zweckmäßigerweise durch Röntgenstrahlen detektierbar sein. Der Unterschied kann allgemein die Absorptionseigenschaften des Materials bezüglich Röntgenstrahlen betreffen. Denkbar ist jedoch auch ein Unterschied im Wellenlängenspektrum eines durch das Material gerichteten Röntgenstrahls. Auch jede sonstige Materialeigenschaft, die durch Untersuchung eines durch das Material hindurch gerichteten elektromagnetischen Strahls (Röntgenstrahl, Terrahertz-Strahlung etc.) erfassbar ist, kann als Unterscheidungskriterium zwischen Material $M_A$ und $M_B$ herangezogen werden.

Vorzugsweise ist der Gegenblock monolithisch, also aus einem durchgehenden Körper hergestellt. Schwierig zu untersuchenden Stoßstellen und zusätzlicher Montageaufwand werden dadurch vermieden.

Zweckmäßigerweise ist der Gegenblock mit einer treppenförmige Oberseite ausgebildet und umfasst eine Anzahl m von in Y-Richtung hintereinander liegenden Stufen $T_y$ unterschiedlicher Materialdicke. Die Stufen sind in Z-Richtung durchstrahlbar und ihre jeweils von der Y-Position abhängige Dicke $DT_y$ ist in X-Richtung vorzugsweise konstant.

Vorzugsweise ist die Oberseite des Gegenblocks komplementär zur Unterseite des Profilblocks geformt. Da für jede der Stufen des Gegenblocks die Unterseitenhöhe der Segmente des Profilblocks in X-Richtung konstant ist, lässt sich der Profilblock bevorzugt von oben auf den Gegenblock aufsetzen, sodass die Oberseite des Gegenblocks bzw. seiner einzelnen Stufen $T_y$ an der in X-Richtung in konstanter Höhe verlaufenden Unterseite des Profilblocks anliegen kann. So ergibt sich in kompakter Bauweise in einer X-Y-Matrix im Bereich jedes Segments $S_{xy}$ die Kombination zweier unterschiedlicher Materialien in Z-Richtung, um diese gemeinsam zu durchstrahlen.

Alternativ kann der Gegenblock auch in Z-Richtung beabstandet und/oder oberhalb des Profilblocks angeordnet werden. Die möglichst abstandslose Anordnung von Profilblock und Gegenblock ist jedoch zu bevorzugen, da das Winkelsegment eines Röntgenstrahlenfächers, welches innerhalb des Segments durch beide Blöcke gerichtet werden kann, , mit zunehmendem Abstand zwischen Profilblock und Gegenblock kleiner wird und die Bildung eines zuverlässigen Mittelwerts erschwert. Natürlich kann die Anordnung von oberem Profilblock mit darunter liegendem Gegenblock auch als Ganzes umgekehrt (auf den Kopf gestellt) werden. Unter Berücksichtigung der dann zu korrigierenden X- und Y-Richtungen bzw. -koordinaten ergeben sich für die einzelnen Segmente identische Durchstrahlungsverhältnisse in Z-Richtung.

Damit Profilblock und Gegenblock möglichst komplementär zueinander ausgebildet sind, ist vorzugsweise vorgesehen, dass die Abmessung in Y-Richtung einer Treppenstufe $T_y$ derjenigen Y-Abmessung eines Segmentes $S_{xy}$ des Profilblocks entspricht.

Die unterschiedlichen Dicken des Gegenblocks, die mit den unterschiedlichen Dicken des Profilblocks kombiniert werden sollen, ergeben sich aus den unterschiedlichen Stufenhöhen. Vorzugsweise erstreckt sich der Gegenblock daher von einer für alle Stufen gemeinsamen Unterseite bis auf eine für jede Stufe unterschiedliche Z-Höhe. Der Höhenunterschied zweier in Y-Richtung benachbarter Stufen entspricht vorzugsweise dem Dickenunterschied zweier in X-Richtung benachbarter Segmente des Profilblocks. Dadurch lassen sich die zuvor bereits beschriebenen unterschiedlichen Segmente mit gleicher Gesamtdicke ausbilden. Alternativ ist es jedoch denkbar, die Dicken oder Dickenänderung der in Y-Richtung hintereinander liegenden einzelnen Stufen unabhängig von der Dicke der Segmente des Profilblocks zu wählen. Insbesondere unter Berücksichtigung der Absorptionseigenschaften des Gegenblockmaterials kann es zweckmäßig sein, die Dicken oder deren Unterschied zweier benachbarter Stufen nach einem linearen oder nichtlinearen Zusammenhang zwischen Materialdicke und Absorptionseigenschaften zu wählen. Ähnlich wie für den Profilblock können so insbesondere nichtlineare Zusammenhänge zwischen Materialdicke und Absorptionseigenschaften in einen linearen Zusammenhang zwischen der jeweiligen Y-Position der Stufe und ihrer Strahlungsabsorption überführt werden.

Obwohl die Materialpaarung des Profilblocks mit dem Gegenblock erfindungsgemäß von besonderem Interesse ist, soll der Prüfkörper auch die Möglichkeit bieten, in Z-Richtung nur einen der beiden Blöcke an unterschiedlichen Dickenpositionen zu durchstrahlen. So lassen sich die Absorptionseigenschaften des reinen Profilblockmaterials und/oder des reinen Gegenblockmaterials in der Prüfanordnung zusätzlich erfassen, das jeweils andere Material wäre in diesem Fall Luft.

In einer vorteilhaften Ausführungsform der Erfindung ist daher vorgesehen, dass ein Abschnitt $A_0$ des

Profilblocks in X-Richtung oder in Y-Richtung in Form eines Überstands über den Gegenblock B seitlich hinausragt, so dass dort oberhalb oder unterhalb des Profilblocks A kein Abschnitt des Gegenblocks B, sondern bevorzugt das Material "Luft", angeordnet ist. In gleichem Sinne kann alternativ oder zusätzlich vorgesehen sein, dass ein Abschnitt $B_0$ des Gegenblocks B in X-Richtung oder in Y-Richtung in Form eines Überstands über den Profilblock A seitlich hinausragt, so dass dort oberhalb oder unterhalb des Gegenblocks B kein Abschnitt des Profilblocks A, sondern bevorzugt Luft, angeordnet ist. Entsprechend zeigt Figur 2a oder 2b, dass der Profilblock A den Gegenblock B in Y-Richtung mit dem Abschnitt $A_0$ überragt, während zugleich der Gegenblock B in X-Richtung mit dem Abschnitt $B_0$ unter dem Profilblock A hervorragt. Die den Überstand bildenden Segmente sind vorzugsweise etwa doppelt so breit wie die an den Überstand angrenzenden Segmente (so sind die den Überstand des Profilblocks in Figur 2a mit ausbildenden Segmente $S_{x,1}$ jeweils etwa doppelt so breit wie die in Y-Richtung angrenzenden Segmente $S_{x,2}$.) Dadurch bieten diese Segmente einen Bereich mit Material des anderen Blocks darüber oder darunter sowie einen weiteren Bereich, der ausschließlich vom jeweiligen Block gebildet wird.

Nach einer vorteilhaften Ausführungsform ist weiterhin vorgesehen, dass oberhalb, unterhalb oder zwischen dem Profilblock A und dem Gegenblock B wenigstens ein aus einem dritten Material $M_c$ gebildeter, vorzugsweise monolithischer Ergänzungsblock C, D,... angeordnet ist, um mehrere verschiedene, in Z-Richtung zu durchstrahlende Materialpaarungen zu erzeugen. Der Ergänzungsblock kann dabei eine für jedes Segment konstante Dicke oder stufenweise ansteigende Dicken aufweisen, um die Strahlungsabsorption der jeweiligen Segmente entsprechend zu beeinflussen. Denkbar ist jedoch auch, nur für eine Auswahl der Segmente deren vom Profilblock und vom Gegenblock gebildeten Durchstrahlungseigenschaften zusätzlich gezielt durch das Material $M_c$ zu verändern, und auf andere Segmente keinen Einfluss zu nehmen. Beispielsweise könnte ab einer bestimmten Dicke des Gegenblocks B (der mit dem Material $M_B$ beispielsweise Knochen repräsentieren könnte) eine zusätzliche Materialschicht C in konstanter oder variabler Dicke in Z-Richtung über, unter oder zwischen den Blöcken A und B angeordnet werden, der beispielsweise eine ab einer gewissen Knochendicke stets auftretende Fettschicht repräsentieren könnte). Grundsätzlich lassen sich beliebig viele verschiedene Materialien in Z-Richtung übereinander anordnen. Zu bedenken ist jedoch, dass die für nur zwei Materialien erfindungsgemäß mögliche Kombination "*jede Dicke des Profilblocks mit jeder Dicke des Gegenblocks*" im dreidimensionalen Raum bei einer durch das zusätzliche Material C hinzukommenden weiteren "Dimension" nicht mehr ohne weiteres möglich ist.

Im Bereich der Lebensmittelverarbeitung kann vorzugsweise vorgesehen sein, dass die Durchstrahlungseigenschaften des Materials des Profilblocks oder des Gegenblocks oder des Ergänzungsblocks bezüglich Röntgenstrahlen im Wesentlichen denjenigen entsprechen von wahlweise tierischem Fett, Wasser, Fleisch, Knochen, Glas, Metall oder Kunststoff. Je nach Anwendungsfall kann auch anderes Material verwendet werden, welches den Durchstrahlungseigenschaften eines zu untersuchenden Materials innerhalb vorgebbarer Toleranzen entspricht oder identisch zu diesem Material ist.

Nach einer vorteilhaften Ausführungsform der Erfindung ist ferner vorgesehen, dass einer oder mehrere der Blöcke A, B, C... Kennzeichnungsmittel aufweisen, die vorzugsweise mittels Röntgenstrahlen detektierbar sind und/oder Information enthalten oder wenigstens einem der Blöcke zuordenbar machen. Dabei kann es sich um eine eindeutige Identifikation wenigstens eines der Blöcke handeln. Denkbar wäre etwa die Anordnung geeigneter metallischer Elemente oder Codierungen am oder im jeweiligen Block, um aus dem bei seiner Durchleuchtung entstehenden Röntgenbild Rückschlüsse auf die Art des Blocks ziehen zu können. Auch die räumliche Ausrichtung und/oder die Position eines Blocks kann auf diese Weise bestimmt werden. Dazu könnte der Block räumlich angeordnete Kennzeichnungselemente aufweisen (im einfachsten Fall sind dies kleine metallische Elemente wie beispielsweise . Kugeln). Die Auswertung des Röntgenbilds unter Zuhilfenahme trigonometrischer Grundsätze erlaubt dann (etwa unmittelbar vor der Anlernphase) die Überprüfung, ob die Blöcke relativ zueinander und/oder relativ zur Röntgenquelle korrekt positioniert sind. Fehlmessungen lassen sich so vermeiden. Schließlich können die Kennzeichnungsmittel auch zur Ermittlung von Kennwerten oder Korrekturwerten dienen, welche beispielsweise die Durchstrahlungseigenschaften eines bestimmten Blocks oder einzelner Segmente des Blocks oder des gesamten Prüfkörpers betreffen. Die Auswertung des Röntgenbilds zur Ermittlung der Lage, der Position oder der Kennwerte bzw. Korrekturwerte oder die Speicherung der die einzelnen Blöcke und Materialien identifizierenden Kennwerte kann computergestützt erfolgen, und davon abhängige Steuersignale zur Steuerung der Anlernphase (Abbruch, Neuausrichtung, Fördergeschwindigkeit etc.) können automatisch erzeugt werden.

Der erfindungsgemäße Prüfkörper kann Bestandteil einer Röntgeninspektionsvorrichtung sein. Die Röntgeninspektionsvorrichtung kann natürlich auch mehrere verschiedene Prüfkörper, Profilblöcke und/oder Gegenblöcke aufweisen. Denkbar ist auch ein Sortiment von Profilblöcken und Gegenblöcken, bei dem ein Profilblock mit unterschiedlichen Gegenblöcken bzw. unterschiedliche Profilblöcke mit einem Gegenblock kombinierbar sind. So ließe sich beispielsweise ein das Material Fleisch repräsentierender Profilblock einmal mit einem Gegenblock kombinieren, der das Durchstrahlungsverhalten von Knochen aufweist, während eine Kombination des Profilblocks mit einem anderen Gegenblock die Paarung Fleisch - Fett simulieren würde.

Die Matrixgröße eines erfindungsgemäßen Profilblocks, Gegenblocks, Ergänzungsblocks oder Prüfkörpers ist theoretisch nicht begrenzt. Sie nimmt zu mit der Anzahl der gewünschten Dickenkombinationen. Bereits eine in der X- und Y-Richtung aufgespannte 2 x 2-Segmentmatrix bietet den erfindungsgemäßen Vorteil, unterschiedliche Materialdicken platzsparend miteinander kombinieren zu können. Eine größere Matrix erlaubt entsprechend mehr Kombinationen, wobei je nach Anwendungsfall die Anzahl n der Segmente in X-Richtung verschieden sein kann von der Anzahl k der Segmente in Y-Richtung. Ein vollständig ausgebildeter 12x12-Prüfkörper bietet beispielsweise 144 Kombinationen, wobei ein durch den Profilblock und den Gegenblock jeweils zusätzlich gebildeter seitlicher Überstand nochmals 24 Kombinationen der Blöcke mit dem Material "Luft" hinzufügt.

Bei der Durchstrahlung eines erfindungsgemäßen Prüfkörpers kann es zweckmäßig sein, zur Auswertung der Durchstrahlungseigenschaften jedes Segments nur diejenigen Strahlen heranzuziehen, die vom Rande des Segments einen gewissen Abstand haben. Der störende Einfluss von Dickensprüngen zu benachbarten Segmenten wird so bei der Auswertung oder Mittelwertbildung sicher ausgeschlossen.

Die Bestandteile des erfindungsgemäßen Prüfkörpers (Profilblock, Gegenblock, Ergänzungsblock) können auf unterschiedliche Weise hergestellt werden. Infrage kommt unter anderem die Herstellung im 3D-Druck, durch Sintern, Fräsen, Pressen, Kleben, Gießen, Lasern, Erodieren, Ätzen oder Kombinationen daraus. Die Bestandteile können durch dem Fachmann bekannte Mechanismen erforderlichenfalls - auch dauerhaft - miteinander verbunden werden, etwa durch Kleben, Verschrauben, Verrasten, Verschweißen oder Kombinationen davon.

Die vorliegende Erfindung wurde beschrieben anhand von Raumachsen mit zugehörigen Koordinaten x, y, z und Indizes für die einzelnen Segmente. Erfindungswesentlich ist jedoch nicht die Benennung oder auch die Ausrichtung der Raumachsen zueinander, sondern das Prinzip, einen Profilblock auszubilden, der in zwei voneinander verschiedenen Raumrichtungen X und Y jeweils Segmente mit unterschiedlicher Dicke und unterschiedlicher Höhe in Z-Richtung ausbildet. Aus konstruktiven Gründen bietet es sich an, die Dicke beispielsweise in X-Richtung mit zunehmendem X-Index stufenartig und um jeweils einen konstanten Wert anwachsen zu lassen, während die Oberseitenhöhe in Y-Richtung in gleicher Weise stufenartig zunimmt. Sofern konstruktiv möglich ist der erfindungsgemäße Profilblock jedoch nicht auf eine solche streng aufsteigende stufenartige Ausführungsform beschränkt. Der erfindungsgemäße Gedanke wird auch dann verwirklicht, wenn der Profilblock an beliebigen X-Y-Position einer zweidimensionalen Matrix wenigstens vier Segmente mit in einer dritten Dimension jeweils unterschiedlichen Dicken und unterschiedlichen Oberseitenhöhen aufweist, um jedes Segment in Z-Richtung mit einem Abschnitt des Gegenblocks bestimmter Dicke zu kombinieren und so möglichst alle Dicken-Kombinationen des Profilblocks mit dem Gegenblock zu ermöglichen.

Nachfolgend soll eine Ausführungsform eines erfindungsgemäßen Prüfkörpers anhand von Figuren näher erläutert werden. Dabei zeigen

Figuren 1a, 1b    perspektivische Ansichten eines Profilblocks oberhalb eines Gegenblocks;

Figuren 2a, 2b    die Blöcke gemäß Figuren 1a, 1b unmittelbar aufeinander liegend;

Figur 3    die Darstellung der Figur 1a mit weiteren Details;

Figur 4    einen Profilblock mit weiteren Details, teilweise transparent dargestellt; und

Figur 5    das Durchstrahlungsergebnis eines erfindungsgemäßen Prüfkörpers.

Figur 1a zeigt eine vereinfachte perspektivische Darstellung eines erfindungsgemäßen Prüfkörpers R. Der Prüfkörper R umfasst einen Profilblock A, der aus einem ersten Material $M_A$ gebildet ist und sich in einer Längsrichtung X, einer Querrichtung Y sowie einer Höhenrichtung Z erstreckt. In Z-Richtung unterhalb des Profilblocks A ist ein treppenförmiger Gegenblock B aus einem zweiten Material $M_B$ angeordnet. Weite Bereiche des Profilblocks A liegen in Z-Richtung oberhalb des Gegenblocks B. Ein in Z-Richtung von oben durch den Profilblock A gerichteter Röntgenstrahl durchdringt daher zuerst den Profilblock A und danach auch den darunterliegenden Gegenblock B.

Figur 1b zeigt die gleiche Anordnung wie Figur 1a, wobei die beiden Blöcke A, B farblich hervorgehoben sind, um die perspektivische Anordnung zu verdeutlichen.

Figur 2a zeigt in perspektivische Anordnung die bereits aus den Figuren 1a und 1b bekannte Kombination des Profilblocks A mit dem Gegenblock B, wobei hier der Profilblock unmittelbar und nahezu abstandslos auf dem Gegenblock aufliegt.

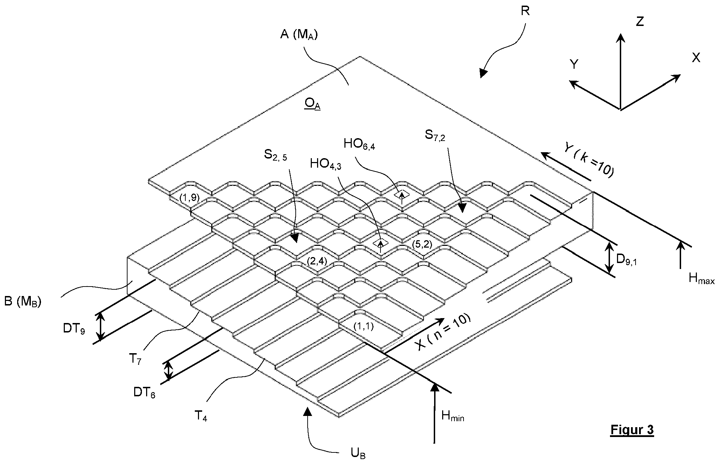

Figur 3 zeigt die Matrix-Systematik, nach der ein erfindungsgemäßer Prüfkörper aufgebaut ist. Der Profilblock A erstreckt sich in X-Richtung entlang einer Anzahl von n Segmenten $S_{xy}$, wobei in dieser Ausführungsform n=10 ist. In Y-Richtung ist der Profilblock A in eine Anzahl von k Segmenten aufgeteilt, wobei in dieser Ausführungsform k=10 gewählt ist. Jedes Segment $S_{xy}$ wird durch seine X-und Y-Koordinate x, y, bezeichnet. So liegt etwa das Segment mit der Koordinate x=1 und y=1, welches dann mit "$S_{1,1}$" bezeichnet würde, in Figur 1a im vordersten untersten Abschnitt des Profilblocks A. Für weitere Segmente sind die Koordinaten beispielhaft eingetragen, und die Segmente $S_{7,2}$ sowie $S_{2,5}$ sind zur Verdeutlichung angegeben.

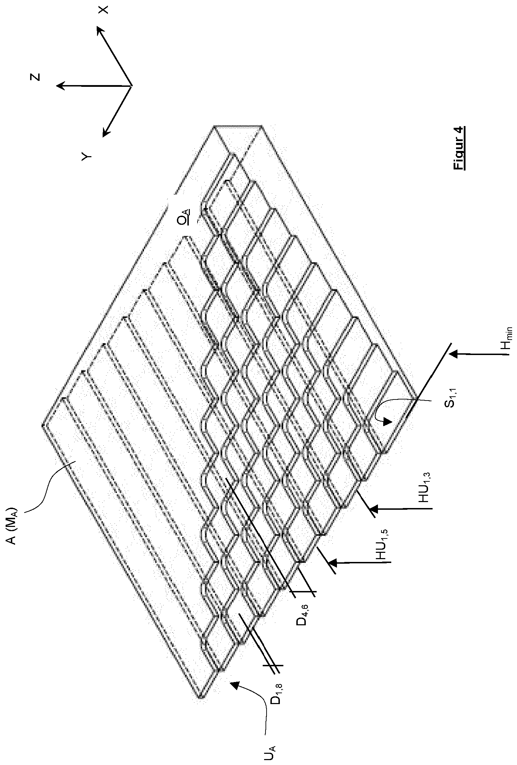

Der Profilblock A erstreckt sich von einer Oberseite $O_A$ bis zu einer Unterseite $U_A$ (siehe Figur 4). Die Unterseite $U_A$ ist nach unten begrenzt durch ein Mindestniveau $H_{min}$, während die Oberseite auf einem Maximalniveau $H_{max}$ liegt.

Jedes Segment des Profilblocks A erstreckt sich von einer segmentbezogenen Unterseitenhöhe $HU_{xy}$ bis auf eine segmentbezogene Oberseitenhöhe $HO_{xy}$ und bildet dazwischen jeweils die Dicke $D_{xy}$ des Segments aus. Wie insbesondere entlang der Koordinate y=1 zu sehen ist, nimmt die Dicke des Profilblocks A mit zunehmender X-Koordinate jeweils zu und erreicht im Segment $S_{10,1}$ die maximale Höhe $H_{max}$ des Profilblocks. In Y-Richtung verändert sich die jeweilige Dicke des Profilblocks A nicht, solange die maximal Höhe $H_{max}$ des Profilblocks A nicht erreicht ist. Im Bereich unterhalb der maximalen Höhe hängt die Dicke daher nur von der X-Position ab. In Y-Richtung hingegen erhöht sich die Oberseitenhöhe $HO_{xy}$ mit zunehmender Y-Koordinate, während auch die Unterseitenhöhe $HU_{xy}$ jeweils um das gleiche Maß zunimmt, und daher die Dicke $D_{xy}$ innerhalb der gleichen Y-Koordinate konstant bleibt. Die Unterseitenhöhe $HU_{xy}$ ändert sich mit zunehmender X-Koordinate nicht. Dadurch entsteht die Oberfläche $O_A$ nach Art einer zweidimensional aufsteigenden Treppe, während die Unterseite $U_A$ eine einfache Treppenform aufweist.

Der in Figur 3 unterhalb des Profilblocks A angeordnete Gegenblock B erstreckt sich ebenfalls in X- und Y-Richtung und ist als Treppe mit einzelnen Stufen $T_y$ ausgebildet. Diese erstrecken sich von einer gemeinsamen Unterseite $U_B$ in Z-Richtung zu einer für jede Y-Koordinate verschiedenen Stufenhöhe mit einer individuellen Stufendicke $DT_y$. Einige solcher Stufen und Stufendicken sind beispielhaft in Figur 3 bezeichnet. Die Breite einer Stufe in Y-Richtung entspricht hier jeweils der Breite der Segmente des Profilblocks A. Durch diese Formgebung der Unterseite $U_A$ des Profilblocks und der Oberseite $O_B$ des Gegenblocks können sich die jeweiligen Flächen der beiden Blöcke weitgehend abstandslos aneinander anschmiegen, wenn sie - aufeinander gelegt werden (Figur 2a, Figur 2b).

In dieser (in Figur 2 gezeigten) Anordnung ragt der Profilblock A mit einem Überstand $A_0$ in Y-Richtung seitlich über den Gegenblock B hinaus. In diesem Bereich erfasst ein entlang der Z-Richtung durch den Prüfkörper gerichteter Röntgenstrahl nur das Material des Profilblocks A, während der Bereich unterhalb des Überstands als Material "Luft" gilt. In gleicher Weise ragt der Gegenblock mit einem Überstand $B_0$ in X-Richtung seitlich unter dem Profilblock A hervor, sodass anstelle des Profilblockmaterials hier wiederum das Material "Luft" durchleuchtet würde.

Die unter anderem in Figur 2a und 2b gezeigte Anordnung des Profilblocks und des Gegenblocks, die auch als Prüfanordnung bezeichnet wird, bildet erfindungsgemäß die Kombination unterschiedlicher Materialdicken der beiden Blöcke in einer X-Y-Matrix in kompakter Bauform. Transportiert man den Prüfkörper, beispielsweise in X-Richtung, durch einen Röntgenstrahlfächer, der den Prüfkörper beispielsweise parallel zur Y-Richtung durchdringt, so lassen sich in kurzer Zeit und ohne dass die Anordnung von Profilblock und Gegenblock relativ zueinander geändert werden müsste, alle relevanten Dickenkombinationen durchstrahlen und die jeweils gemeinsamen Durchstrahlungseigenschaften durch einen nicht näher gezeigten Detektor (Zeilen- oder Flächensensor) für jedes Segment individuell erfassen und über eine geeignete Datenverarbeitungsvorrichtung verarbeiten, abspeichern oder weiterleiten.

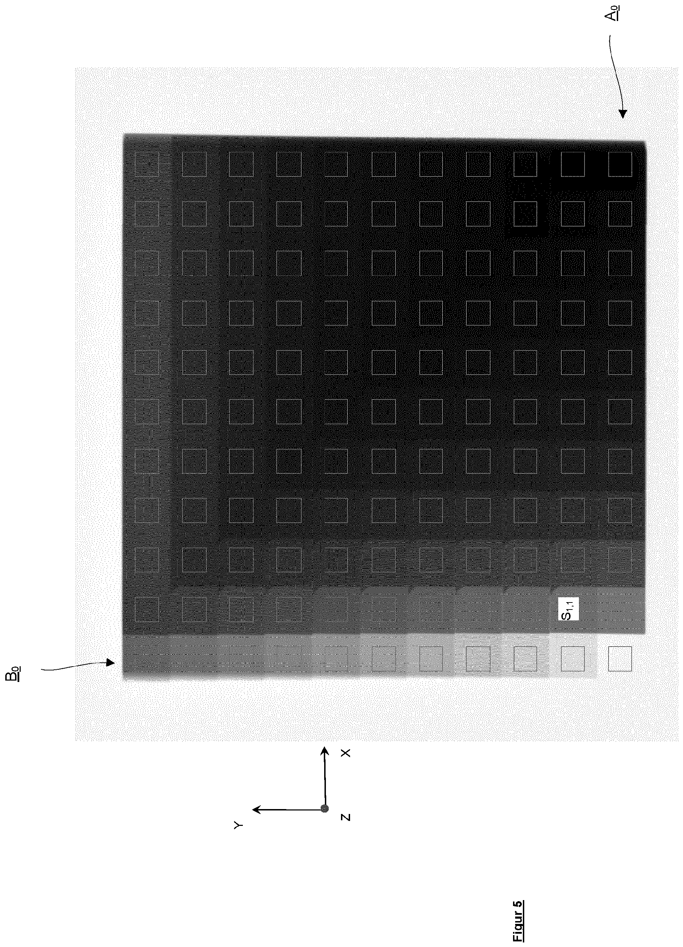

Figur 5 zeigt das Ergebnis einer Durchstrahlung eines erfindungsgemäßen Prüfkörpers mit Überstand sowohl des Profilblocks als auch des Gegenblocks. Das Segment $S_{1,1}$ ist zur Orientierung beschriftet. Zu sehen ist, dass die Intensität des den Detektor erreichende Röntgenstrahls mit zunehmender X- und Y-Koordinate abnimmt, da in dieser Richtung die Gesamtdicke des Prüfkörpers zunimmt, solange die maximale Höhe noch nicht erreicht ist. Da der Prüfkörper in dieser Ausführungsform auf die maximale Höhe des Segments $S_{10,1}$ begrenzt ist ($Hmax = HO_{10,1}$), nimmt die Dicke des Profilblocks A nicht mehr zu für Segmente, deren Koordinatensumme (x+y) größer ist als 11. Da auch die Stufendicke $DT_y$ des Gegenblocks B in X-Richtung konstant ist, sind die Grauwerte für alle Segmente mit (x + y) > 11 mit zunehmender X-Koordinate konstant.Die in den einzelnen Segmenten der Figur 5 angedeuteten umrandeten Bereiche stellen diejenigen Bereiche dar, die zur Auswertung der Durchstrahlung, ggfsl. Unter Bildung von Mittelwerten, herangezogen werden, um mögliche Einflüsse angrenzender Segmente mit abweichender Dicke sicher ausschließen zu können.

Bezugszeichenliste

A        Profilblock
$A_0$     Abschnitt, Überstand des Profilblocks
B        Gegenblock
$B_0$     Abschnitt, Überstand des Gegenbocks
C, D     Ergänzungsblock
$D_A$     Eine Dicke des Profilblocks A
$D_B$     Eine Dicke des Gegenblocks B
$D_{xy}$   Dicke des Segments $S_{xy}$
f        Anzahl unterschiedlicher Oberseitenhöhen
$H_{max}$  Maximalniveau
$H_{min}$  Basisniveau
$HO_{xy}$  Oberseitenhöhe des Segments $S_{xy}$
$HU_{xy}$  Unterseitenhöhe des Segments $S_{xy}$
k        Anzahl Segmente in Y-Richtung
m        Anzahl der Stufen T
$M_A$     Material des Profilblocks A
$M_B$     Material des Gegenblocks B
n        Anzahl Segmente in X-Richtung

| | |
|---|---|
| $O_A$ | Oberseite des Profilblocks A |
| $O_B$ | Oberseite des Gegenblocks B |
| R | Prüfkörper |
| $S_{xy}$ | Segment an der Position x, y |
| $T_y$ | Stufe des Gegenblocks B an der Position y |
| $U_A$ | Unterseite des Profilblocks A |
| $U_B$ | Unterseite des Gegenblocks B |
| x | Index, X-Koordinate |
| X | Längsrichtung |
| y | Index, Y-Koordinate |
| Y | Querrichtung |
| Z | Höhenrichtung |

**Patentansprüche**

1. Prüfkörper (R) für Röntgeninspektionsanlagen,

   a) umfassend einen aus einem ersten Material ($M_A$) gebildeten, vorzugsweise monolithischen Profilblock (A) und einen vorzugsweise monolithischen Gegenblock (B), dessen Material ($M_B$) sich in wenigstens einer Eigenschaft vom ersten Material ($M_A$) unterscheidet, wobei sich der Profilblock (A) und der Gegenblock (B) in einer Längsrichtung (X), einer dazu rechtwinklig verlaufenden Querrichtung (Y) und einer zu den beiden Richtungen (X, Y) senkrecht verlaufenden Höhenrichtung (Z) erstrecken,

   b) wobei der Profilblock (A) eine Anzahl von Bereichen mit in Z-Richtung unterschiedlicher Dicke ($D_{A1}$, $D_{A2}$, ...) aufweist und wobei der Gegenblock (B) eine Anzahl von Bereichen mit in Z-Richtung unterschiedlicher Dicke ($D_{B1}$, $D_{B2}$, ...) aufweist,

   c) wobei der Profilblock (A) und der Gegenblock (B) in einer vorgebbaren Prüfanordnung in Z-Richtung übereinander anordenbar sind, um gemeinsam in Z-Richtung durchstrahlbare, voneinander verschiedene Materialpaarungen zu bilden,

   d) dass die Dicken des Profilblocks und des Gegenblocks in einer X-Y-Matrix miteinander kombiniert sind, indem in X-Richtung wenigstens zwei, vorzugsweise alle, verschiedenen Dicken des Profilblocks (A) mit einer Dicke des Gegenblocks (B) kombiniert sind, während in Y-Richtung wenigstens zwei, vorzugsweise alle verschiedenen Dicken des Gegenblocks (B) mit einer Dicke des Profilblocks (A) kombiniert sind **dadurch gekennzeichnet,**

   e) **dass** die Prüfanordnung entlang von Diagonalen angeordnete Segmente gleicher Gesamtdicke mit jeweils unterschiedlichen einzelnen Dicken ($D_A$, $D_B$) bildet,

   f) wobei entlang jeder Diagonalen alle Segmente einer Diagonalen eine jeweils konstante Gesamtdicke aufweisen.

2. Prüfkörper nach Anspruch 1,

   a) wobei der Profilblock (A) eine Oberseite ($O_A$) und eine Unterseite ($U_A$) aufweist, und

   b) wobei der Profilblock (A) in einer X-Y-Matrix Segmente ($S_{xy}$) mit jeweils konstanter Dicke ($D_{xy}$) in Z-Richtung aufweist, die zu Prüfzwecken durchstrahlbar sind, wobei jedes Segment durch seine jeweilige X- und Y-Koordinate (x, y) identifizierbar ist, und

   c) wobei in X-Richtung eine Anzahl von (n) Segmente ($S_{xy}$) und in Y-Richtung eine Anzahl von (k) Segmenten ($S_{xy}$) mit (n > 1, k > 1) vorgesehen ist, und

   d) wobei sich jedes Segment ($S_{xy}$) in Z-Richtung von einer Oberseite mit einer zugehörigen Oberseitenhöhe ($HO_{xy}$) bis zu einer Unterseite mit einer zugehörigen Unterseitenhöhe ($HU_{xy}$) erstreckt und dadurch die Dicke ($D_{xy}$) ausbildet, und

   e) wobei sich die zur Durchstrahlung vorgesehenen Bereiche aller Segmente ($S_{xy}$) in Z-Richtung erstrecken zwischen einem Basisniveau ($H_{min}$), welches den Mindestwert für jede Unterseitenhöhe ($HU_{xy}$) bildet, und einem Maximalniveau ($H_{max}$), welches den Maximalwert für jede Oberseitenhöhe ($HO_{xy}$) bildet, und

   f) wobei der Profilblock (A) oberhalb des Basisniveaus ($H_{min}$) Segmente ($S_{xy}$) mit einer Anzahl (f) unterschiedlicher Oberseitenhöhen ($HO_{xy}$) aufweist,

   **dadurch gekennzeichnet,**

   g) **dass** für wenigstens vier, vorzugsweise alle, Segmente ($S_{xy}$)

   $g_1$) die Oberseitenhöhe ($HO_{xy}$) mit zunehmendem x-Index und mit zunehmendem y-Index zunimmt bis höchstens auf das Maximalniveau ($H_{max}$), und

   $g_2$) die Unterseitenhöhe ($HU_{xy}$) mit zunehmendem x-Index konstant bleibt und mit zunehmendem y-Index zunimmt.

3. Prüfkörper nach dem vorhergehenden Anspruch, **dadurch gekennzeichnet, dass** die Dickenänderung mit zunehmendem x-Index jeweils gleich ist.

4. Prüfkörper nach Anspruch 2 oder 3, **dadurch gekennzeichnet, dass** die Dicke ($D_{xy}$) mit zunehmendem x-Index zunimmt und mit zunehmendem Y-Index konstant bleibt.

5. Prüfkörper (A) nach einem der Ansprüche 1 bis 4, **dadurch gekennzeichnet, dass** die Dicke ($D_{xy}$) folgt aus der Bedingung $D_{xy} = HO_{xy} - HU_{xy}$, wobei für eine Gruppe von wenigstens vier, vorzugsweise für alle Segmente ($S_{xy}$) gilt:

$$HO_{xy} = H_{min} + (H_{max} - H_{min}) \cdot (x+y-1)/f$$

und

$$HU_{xy} = H_{min} + (H_{max} - H_{min}) \cdot (y-1)/f$$

6. Prüfkörper nach einem der vorigen Ansprüche,

   a) wobei der Gegenblock (B) gebildet wird durch eine Anzahl (m) von in Y-Richtung hintereinanderliegenden, zu Prüfzwecken durchstrahlbaren Stufen ($T_y$) mit einer entlang der X-Richtung jeweils konstanten Stufendicke, ($DT_y$) und
   b) wobei der Gegenblock (B) oberhalb oder unterhalb des Profilblocks (A) zu diesem in Höhenrichtung (Z) beabstandet oder abstandslos gegenüberliegt,

   um die beiden gepaarten Blöcke (A, B) im Bereich eines Segments ($S_{xy}$) gemeinsam in Z-Richtung zu durchstrahlen und für mehrere Segmente ($S_{xy}$) jeweils einen Wert erfassen zu können, der die gemeinsamen Durchstrahlungseigenschaften der beiden in diesen Segmenten ($S_{xy}$) übereinander liegenden Blöcke charakterisiert.

7. Prüfkörper nach dem vorhergehenden Anspruch, **dadurch gekennzeichnet, dass** die Abmessung in Y-Richtung einer Treppenstufe ($T_y$) derjenigen Y-Abmessung eines Segmentes ($S_{xy}$) des Profilblocks (A) entspricht.

8. Prüfkörper nach einem der vorigen Ansprüche, **dadurch gekennzeichnet, dass** sich jede Stufe ($T_y$) von einer im Wesentlichen ebenen, allen Stufen gemeinsamen Unterseite ($U_B$) des Gegenblocks (B) bis auf eine für jede Stufe ($T_y$) unterschiedliche Höhe oberhalb der Unterseite ($U_B$) erstreckt.

9. Prüfkörper nach einem der vorigen Ansprüche, **dadurch gekennzeichnet, dass** ein Abschnitt ($A_0$) des Profilblocks (A) in X-Richtung oder in Y-Richtung in Form eines Überstands über den Gegenblock (B) seitlich hinausragt, so dass dort oberhalb oder unterhalb des Profilblocks (A) kein Abschnitt des Gegenblocks (B) angeordnet ist.

10. Prüfkörper nach einem der vorigen Ansprüche, **dadurch gekennzeichnet, dass** ein Abschnitt ($B_0$) des Gegenblocks (B) in X-Richtung oder in Y-Richtung in Form eines Überstands über den Profilblock (A) seitlich hinausragt, so dass dort oberhalb oder unterhalb des Gegenblocks (B) kein Abschnitt des Profilblocks (A) angeordnet ist.

11. Prüfkörper nach Anspruch 9 oder 10, **dadurch ge-**

**kennzeichnet, dass** die Abmessung, um welches der Überstand über den jeweils anderen Block hinausragt, der in der gleichen Richtung zu messenden Abmessung eines an den Überstand angrenzenden Segments des anderen Blocks entspricht.

12. Prüfkörper nach einem der vorigen Ansprüche, **dadurch gekennzeichnet, dass** der Profilblock (A) mit seiner Unterseite ($U_A$) auf der Oberseite ($O_B$) des Gegenblock (B) aufliegt.

13. Prüfkörper nach einem der vorigen Ansprüche, **dadurch gekennzeichnet, dass** ein aus einem dritten Material ($M_C$, $M_D$) gebildeter, vorzugsweise monolithischer Ergänzungsblock (C, D, ...) vorgesehen ist, der in Z-Richtung oberhalb, unterhalb oder zwischen der Anordnung des Profilblocks und des Gegenblocks positioniert ist.

14. Prüfkörper nach einem der vorigen Ansprüche, **dadurch gekennzeichnet, dass** einer oder mehrere der Blöcke (A, B, C, D...) Kennzeichnungsmittel aufweisen, die vorzugsweise mittels Röntgenstrahlen detektierbar sind und/oder Information enthalten oder wenigstens einem der Blöcke (A, B, C, D...) zuordenbar machen, betreffend

   a) eine eindeutige Identifikation wenigstens eines der Blöcke (A, B, C, D...) und/oder
   b) die aktuelle räumliche Ausrichtung und/oder Position wenigstens eines der Blöcke (A, B, C, D...) und/oder
   c) Kennwerte oder Korrekturwerte für einzelne Segmente ($S_{xy}$) oder deren Druckstrahlungseigenschaften.

15. Röntgeninspektionsvorrichtung, umfassend einen Prüfkörper nach einem der vorigen Ansprüche.

16. Verfahren zur Erfassung der Durchstrahlungseigenschaften von Materialpaarungen unter Verwendungen eines Prüfkörpers nach einem der Ansprüche 1 bis 15, umfassend folgende Schritte:

   a) Durchstrahlung des Segments ($S_{xy}$) eines Profilblocks (A) sowie eines mit dem Profilblock gepaarten Gegenblocks (B) und/oder Ergänzungsblocks (C) in Richtung (Z) mit einer elektromagnetischen Strahlung, insbesondere Röntgenstrahlung,
   b) Erfassen wenigstens einer die Durchstrahlungseigenschaften des Prüfkörpers im Bereich des Segments ($S_{xy}$) charakterisierenden Größe.

17. Verfahren nach Anspruch 16, wobei zur Bestimmung der das Segment ($S_{xy}$) betreffenden Größe ein Flächenbereich des Segments durchstrahlt wird, der in X-Richtung und/oder in Y-Richtung von einem benachbarten Segment einen definierten Mindestabstand einhält.

18. Verwendung eines Prüfkörpers nach einem der Ansprüche 1 bis 15 zur Ermittlung von Durchstrahlungseigenschaften von einer oder mehreren mit dem Prüfkörper gebildeten Materialpaarungen.

**Claims**

1. A test specimen (R) for X-ray inspection systems,

   a) comprising a preferably monolithic profile block (A) formed from a first material ($M_A$) and a preferably monolithic counter-block (B), the material ($M_B$) of which differs in at least one property from the first material ($M_A$), wherein the profile block (A) and the counter-block (B) extends in a longitudinal direction (X), a transverse direction (Y) extends at right angles thereto and a height direction (Z) extends perpendicularly to the two directions (X, Y),
   b) wherein the profile block (A) has a number of areas with different thicknesses in the Z-direction ($D_{A1}$, $D_{A2}$, ...) and wherein the counter-block (B) has a number of areas with different thicknesses in the Z-direction ($D_{B1}$, $D_{B2}$, ...),
   c) wherein the profile block (A) and the counter-block (B) can be arranged one above the other in a predeterminable test arrangement in the Z-direction in order to jointly form material pairs which can be radiated through in the Z-direction and are different from one another,
   d) in that the thicknesses of the profile block and of the counter-block are combined with one another in an X-Y matrix, in that in the X direction at least two, preferably all, different thicknesses of the profile block (A) are combined with a thickness of the counter-block (B), while in the Y direction at least two, preferably all, different thicknesses of the counter-block (B) are combined with a thickness of the profile block (A)
   **characterized in that**
   e) the test arrangement forms segments of the same total thickness arranged along diagonals, each with different individual thicknesses ($D_A$, $D_B$),
   f) wherein along each diagonal all segments of a diagonal have a respective constant total thickness.

2. The test specimen according to claim 1,

   a) wherein the profile block (A) has an upper side ($O_A$) and a lower side ($U_A$), and
   b) wherein the profile block (A) having, in an X-Y matrix, segments ($S_{xy}$) each of constant thickness ($D_{xy}$) in the Z-direction which are transmissive for inspection purposes, each segment being identifiable by its respective X- and Y-coordinate (x, y), and
   c) wherein in the X-direction a number of (n) segments ($S_{xy}$) and in the Y-direction a number of (k) segments ($S_{xy}$) with (n >1, k >1) is provided, and
   d) wherein each segment ($S_{xy}$) extends in the Z-direction from a top side having an associated top side height ($HO_{xy}$) to a bottom side having an associated bottom side height ($HU_{xy}$), thereby forming said thickness ($D_{xy}$), and
   e) wherein the areas of all segments ($S_{xy}$) intended to be radiated through extend in the Z-direction between a base level ($H_{min}$) which forms the minimum value for each lower side height ($HU_{xy}$) and a maximum level ($H_{max}$) which forms the maximum value for each upper side height ($HO_{xy}$), and
   f) wherein the profile block (A) has segments ($S_{xy}$) with a number (f) of different top heights ($HO_{xy}$) above the base level ($H_{min}$),
   **characterized in that**
   g) for at least four, preferably all, segments ($S_{xy}$)
   $g_1$) the top height ($HO_{xy}$) increases with increasing x-index and with increasing y-index up to at most the maximum level ($H_{max}$), and
   $g_2$) the lower side height ($HU_{xy}$) remains constant with increasing x-index and increases with increasing y-index.

3. The test specimen according to the preceding claim, **characterized in that** the change in thickness with increasing x-index is the same in each case.

4. The test specimen according to claim 2 or 3, **characterized in that** the thickness ($D_{xy}$) increases with increasing x-index and remains constant with increasing Y-index.

5. The test specimen (A) according to any of claims 1 to 4, **characterized in that** the thickness ($D_{xy}$) follows from the condition $D_{xy} = HO_{xy} - HU_{xy}$, wherein applies to a group of at least four, preferably to all segments ($S_{xy}$):

$$HO_{xy} = H_{min} + (H_{max} - H_{min}) \cdot (x+y-1)/f$$

and

$$HU_{xy} = H_{min} + (H_{max} - H_{min}) \cdot (y-1)/f$$

6. The test specimen according to any of the preceding claims,

a) wherein the counter-block (B) is formed by a number (m) of stages ($T_y$) which are arranged one behind the other in the Y-direction and which can be radiographed for test purposes and which each have a constant stage thickness along the X-direction, ($DT_y$) and

b) wherein the counter-block (B) lies above or below the profile block (A) at a distance from it in the height direction (Z) or opposite it without any distance,

in order to jointly transmit the two paired blocks (A, B) in the area of a segment ($S_{xy}$) in the Z-direction and to be able to detect a value for several segments ($S_{xy}$) in each case, which characterizes the common transmission properties of the two blocks lying one above the other in these segments ($S_{xy}$).

7. The test specimen according to the preceding claim, **characterized in that** the dimension in the Y-direction of a stair step ($T_y$) corresponds to that Y-dimension of a segment ($S_{xy}$) of the profile block (A).

8. The test specimen according to any of the preceding claims, **characterized in that** each step ($T_y$) extends from a substantially flat underside ($U_B$), common to all steps, of the counter-block (B) to a different height above the underside ($U_B$) for each step ($T_y$).

9. The test specimen according to any of the preceding claims, **characterized in that** a portion ($A_0$) of the profile block (A) projects laterally in the X-direction or in the Y-direction in the form of a projection beyond the counter-block (B), so that no portion of the counter-block (B) is arranged there above or below the profile block (A).

10. The test specimen according to any of the previous claims, **characterized in that** a section ($B_0$) of the counter-block (B) projects laterally in the X-direction or in the Y-direction in the form of a projection beyond the profile block (A), so that no portion of the profile block (A) is arranged there above or below the counter-block (B).

11. The test specimen according to claim 9 or 10, **characterized in that** the dimension by which the projection projects beyond the respective other block corresponds to the dimension, to be measured in the same direction, of a segment of the other block adjacent to the projection.

12. The test specimen according to any of the previous claims, **characterized in that** the profile block (A) rests with its underside ($U_A$) on the upper side ($O_B$) of the counter block (B).

13. The test specimen according to any of the preceding claims, **characterized in that** a preferably monolithic supplementary block (C, D, ...) formed from a third material ($M_C$, $M_D$) is provided, which is positioned in the Z-direction above, below or between the arrangement of the profile block and the counter-block.

14. The test specimen according to any of the preceding claims, **characterized in that** one or more of the blocks (A, B, C, D...) have marking means which are detectable preferably by means of X-rays and/or contain information or make it possible to assign them to at least one of the blocks (A, B, C, D...), concerning

a) a unique identification of at least one of the blocks (A, B, C, D...) and/or

b) the current spatial orientation and/or position of at least one of the blocks (A, B, C, D...) and/or

c) characteristic values or correction values for individual segments ($S_{xy}$) or their transmission properties.

15. An X-ray inspection device comprising a test specimen according to any of the preceding claims.

16. A method of detecting the transmissivity of material pairings using a test specimen according to any of claims 1 to 15, comprising the steps of:

a) transillumination of the segment ($S_{xy}$) of a profile block (A) as well as of a counter-block (B) and/or supplementary block (C) paired with the profile block in direction (Z) with an electromagnetic radiation, in particular X-ray radiation,

b) detection of at least one quantity characterizing the transmission properties of the test specimen in the area of the segment ($S_{xy}$).

17. The method according to claim 16, wherein, in order to determine the quantity relating to the segment ($S_{xy}$), an surface area of the segment is irradiated which maintains a defined minimum distance in the X-direction and/or in the Y-direction from an adjacent segment.

18. A use of a test specimen according to any of claims 1 to 15 for determining penetration properties of one or more material pairings formed with the test specimen.

## Revendications

1. Corps d'essai (R) pour des systèmes d'inspection par rayons X,

   a) comprenant un bloc de profil (A), de préférence monolithique, formé à partir d'un premier matériau ($M_A$) et un contre-bloc (B), de préférence monolithique, dont le matériau ($M_B$) diffère du premier matériau ($M_A$) par au moins une caractéristique, dans lequel le bloc de profil (A) et le contre-bloc (B) s'étendent dans une direction longitudinale (X), dans une direction transversale (Y) s'étendant perpendiculairement à celle-ci et dans une direction verticale (Z) s'étendant verticalement aux deux directions (X, Y),
   b) dans lequel le bloc de profil (A) présente un certain nombre de zones ayant une épaisseur ($D_{A1}$, $D_{A2}$, ...) différente dans la direction Z et dans lequel le contre-bloc (B) présente un certain nombre de zones ayant une épaisseur ($D_{B1}$, $D_{B2}$, ...) différente dans la direction Z,
   c) dans lequel le bloc de profil (A) et le contre-bloc (B) peuvent être disposés l'un sur l'autre dans un agencement pour essai dans la direction Z, pour former ensemble des appariements de matériaux différents les uns des autres et irradiables dans la direction Z,
   d) que les épaisseurs du bloc de profil et du contre-bloc sont combinées dans une matrice X-Y en combinant, dans la direction X, au moins deux, de préférence toutes les différentes épaisseurs du bloc de profil (A) avec une épaisseur du contre-bloc (B) et en combinant, dans la direction Y, au moins deux, de préférence toutes les différentes épaisseurs du contre-bloc (B) avec une épaisseur du bloc de profil (A) **caractérisé en ce que**
   e) l'agencement pour essai le long de diagonales forme, avec chacune des différentes épaisseurs ($D_A$, $D_B$), des segments disposés de même épaisseur totale,
   f) dans lequel, le long de chaque diagonale, tous les segments d'une diagonale présentent chacun une épaisseur totale constante.

2. Corps d'essai selon la revendication 1,

   a) dans lequel le bloc de profil (A) présente une face supérieure ($O_A$) et une face inférieure ($U_A$), et
   b) dans lequel le bloc de profil (A) dans une matrice X-Y présente des segments ($S_{xy}$) ayant chacun une épaisseur constante ($D_{xy}$) dans la direction A, lesquels segments sont irradiables à des fins d'essai, chaque segment pouvant être identifié grâce à ses coordonnées X et Y (x, y) respectives, et

   c) dans lequel un certain nombre de (n) segments ($S_{xy}$) dans la direction X et un certain nombre de (k) segments ($S_{xy}$) dans la direction Y, avec (n >1, k >1), sont prévus, et
   d) dans lequel chaque segment ($S_{xy}$) s'étend, dans la direction Z, d'une face supérieure ayant une hauteur de face supérieure ($HO_{xy}$) correspondante à une face inférieure ayant une hauteur de face inférieure ($HU_{xy}$), et forme ainsi l'épaisseur ($D_{xy}$), et
   e) dans lequel les zones de tous les segments ($S_{xy}$) destinées à être irradiées s'étendent dans la direction Z entre un niveau de base ($H_{min}$), qui constitue la valeur minimale four chaque hauteur de face inférieure ($HU_{xy}$), et un niveau maximal ($H_{max}$), qui constitue la valeur maximale pour chaque hauteur de face supérieure ($HO_{xy}$), et
   f) dans lequel le bloc de profil (A) au-dessus du niveau de base ($H_{min}$) présente des segments ($S_{xy}$) ayant un certain nombre (f) de hauteurs de face supérieure ($HO_{xy}$) différentes,
   **caractérisé en ce que,**
   g) pour au moins quatre, de préférence tous les segments ($S_{xy}$),
   $g_1$) la hauteur de face supérieure ($HO_{xy}$) augmente avec un indice x croissant et avec un indice y croissant, sans dépasser le niveau maximal ($H_{max}$), et
   $g_2$) la hauteur de face inférieure ($HU_{xy}$) reste constante avec un indice x croissant et augmente avec un indice y croissant.

3. Corps d'essai selon la revendication précédente, **caractérisé en ce que** la variation d'épaisseur est dans chaque cas égale à l'indice x croissant.

4. Corps d'essai selon la revendication 2 ou 3, **caractérisé en ce que** l'épaisseur ($D_{xy}$) augmente avec un indice x croissant et reste constante avec un indice y croissant.

5. Corps d'essai (A) selon l'une quelconque des revendications 1 à 4, **caractérisé en ce que** l'épaisseur ($D_{xy}$) résulte de la condition $D_{xy} = HO_{xy} - HU_{xy}$, dans lequel, pour un groupe d'au moins quatre, de préférence pour tous les segments ($S_{xy}$), les conditions suivantes s'appliquent :

$$HO_{xy} = H_{min} + (H_{max} - H_{min}) \cdot (x+y-1)/f$$

et

$$HU_{xy} = H_{min} + (H_{max} - H_{min}) \cdot (y-1)/f$$

6. Corps d'essai selon l'une des revendications précédentes,

a) dans lequel le contre-bloc (B) est constitué par un certain nombre (m) de paliers ($T_y$) agencés en série dans la direction Y et irradiables à des fins d'essai, lesquels paliers ont chacun une épaisseur de palier ($DT_y$) constante le long de la direction X, et

b) dans lequel le contre-bloc (B) au-dessus ou en dessous du bloc de profil (A) est opposé à celui-ci avec ou sans espacement, dans la direction de la hauteur (Z),

pour irradier ensemble les deux blocs (A, B) appariés dans la zone d'un segment ($S_{xy}$) dans la direction Z et pour pouvoir détecter chacun une valeur pour plusieurs segments ($S_{xy}$), laquelle valeur caractérise les propriétés d'irradiation communes des deux blocs superposés dans ces segments ($S_{xy}$).

7. Corps d'essai selon la revendication précédente, **caractérisé en ce que** la dimension d'un palier d'escalier (Ty) dans la direction Y correspond à la dimension Y d'un segment ($S_{xy}$) du bloc de profil (A).

8. Corps d'essai selon l'une quelconque des revendications précédentes, **caractérisé en ce que** chaque palier ($T_y$) s'étend d'une face inférieure ($U_B$) du contre-bloc (B) qui est essentiellement plane et commune à tous les paliers jusqu'à une hauteur différente pour chaque palier ($T_y$), au-dessus de la face inférieure ($U_B$).

9. Corps d'essai selon l'une quelconque des revendications précédentes, **caractérisé en ce qu**'une section ($A_0$) du bloc de profil (A) dépasse latéralement du contre-bloc (B) sous forme de saillie, dans la direction X ou dans la direction Y, de telle sorte qu'aucune section du contre-bloc (B) n'est disposée au-dessus ou en dessous du bloc de profil (A).

10. Corps d'essai selon l'une quelconque des revendications précédentes, **caractérisé en ce qu**'une section ($B_0$) du contre-bloc (B) dépasse latéralement du bloc de profil (A) sous forme de saillie, dans la direction X ou dans la direction Y, de telle sorte qu'aucune section du bloc de profil (A) n'est disposée au-dessus ou en dessous du contre-bloc (B).

11. Corps d'essai selon la revendication 9 ou 10, **caractérisé en ce que** la dimension à laquelle la saillie dépasse de l'autre bloc respectif correspond à la dimension à mesurer dans la même direction d'un segment, adjacent à la saillie, de l'autre bloc.

12. Corps d'essai selon l'une quelconque des revendications précédentes, **caractérisé en ce que** le bloc de profil (A) repose sur la face supérieure ($O_B$) du contre-bloc (B) avec sa face inférieure ($U_A$).

13. Corps d'essai selon l'une quelconque des revendications précédentes, **caractérisé en ce qu**'un bloc complémentaire (C, D, ...), de préférence monolithique, formé à partir d'un troisième matériau ($M_C$, $M_D$) est prévu, lequel bloc complémentaire est positionné, dans la direction Z, au-dessus, en dessous ou entre l'agencement du bloc de profil et du contre-bloc.

14. Corps d'essai selon l'une quelconque des revendications précédentes, **caractérisé en ce que** l'un ou plusieurs des blocs (A, B, C, D...) présentent des moyens d'identification, qui sont détectables de préférence à l'aide de rayons X et/ou contiennent des informations ou rendent attribuables au moins l'un des blocs (A, B, C, D...), relatifs à

a) une identification claire d'au moins l'un des blocs (A, B, C, D...) et/ou
b) l'orientation spatiale actuelle et/ou la position d'au moins l'un des blocs (A, B, C, D...) et/ou
c) des valeurs caractéristiques ou des valeurs de correction pour chaque segment ($S_{xy}$) ou les propriétés d'irradiation de celui-ci.

15. Dispositif d'inspection par rayons X, comprenant un corps d'essai selon l'une quelconque des revendications précédentes.

16. Procédé de détection des propriétés d'irradiation d'appariements de matériaux à l'aide d'un corps d'essai selon l'une quelconque des revendications 1 à 15, comprenant les étapes suivantes :

a) irradiation du segment ($S_{xy}$) d'un bloc de profil (A) et d'un contre-bloc (B) et/ou bloc complémentaire (C) apparié au bloc de profil dans la direction (Z) au moyen d'un rayonnement électromagnétique, notamment un rayonnement X,
b) détection d'au moins une grandeur caractérisant les propriétés d'irradiation du corps d'essai dans la zone du segment ($S_{xy}$).

17. Procédé selon la revendication 16, dans lequel, pour la détermination de la grandeur relative au segment ($S_{xy}$), une zone de surface du segment est irradiée, laquelle zone de surface respecte, dans la direction X et/ou dans la direction Y, un espacement minimal défini par rapport à un segment adjacent.

18. Utilisation du corps d'essai selon l'une quelconque des revendications 1 à 15, pour déterminer les propriétés d'irradiation d'un ou de plusieurs appariements de matériaux formés constitués du corps d'essai.

Figur 1a

Figur 1b

EP 3 761 015 B1

Figur 2b

A (M$_A$)

B (M$_B$)

Figur 2a

A (M$_A$)

B (M$_B$)

S$_{6,3}$

S$_{1,1}$

B$_0$

A$_0$

Figur 3

A (M_A)

Z
Y
X

O_A

U_A

D_{1,8}

D_{4,6}

HU_{1,5}

HU_{1,3}

S_{1,1}

H_{min}

**Figur 4**

Figur 5

**IN DER BESCHREIBUNG AUFGEFÜHRTE DOKUMENTE**

**In der Beschreibung aufgeführte Patentdokumente**

- US 6570955 B1